# EUROPEAN PATENT APPLICATION

(11) **EP 0 947 468 A1**
(43) Date of publication of application: **06.10.1999**
(21) Application number: 97944148.2
(22) Date of filing: 16.10.1997
(51) Int. Cl.: C01F 7/00, C01G 9/00, C08L 27/06, C08K 3/10

(54) **NOVEL COMPOSITE METAL HYDROXIDE SALTS, STABILIZER FOR HALOGENORESINS, AND HALOGENORESIN COMPOSITION**

(30) Priority: 16.10.1996 JP 29565896
(71) Applicant: FUJI CHEMICAL INDUSTRY CO., LTD., Nakaniikawa-gun, Toyama 930-0397 (JP)
(72) Inventor: KOIZUMI, Kenichi, Fuji Chemical Industry Co., Ltd., Nakaniikawa-gun Toyama 930-03 (JP); ISHISAKA, Yutaka, Fuji Chemical Industry Co., Ltd., Nakaniikawa-gun Toyama 930-03 (JP)
(74) Representative: Albrecht, Thomas, Dr.
(86) International application number: JP9703744
(87) International publication number: WO9816470

(57) **Abstract**

There is disclosed a complex metal hydroxide salt represented by the formula (I)

[Aℓ ₂(Li ₍₁₋ₓ₎ · M_{(x+y)} (ZnO)_{z}(OH) _{(6+2y)} ]ₙ (Aⁿ⁻) ₍₁₊ₓ₎ · mH₂O (I)

(wherein M is Mg and/or Zn, Aⁿ⁻ is an anion having a valence of n, and m, x, y and z are respectively in the ranges of 0 ≦ m < 5, 0 < x ≦ 0.5 (preferably 0.01 ≦ x < 0.5), 0 ≦ y ≦ 0.5, 0 ≦ z ≦ 0.5, 0 < y + z < 1 (preferably 0.01 ≦ y + z ≦ 0.5), 0< x + y + z ≦ 1). When incorporated in a halogen-containing resin, it causes less coloration toward the resin and is superior in the thermal stability and ability to capture halogen such as chlorine as compared with the hitherto known lithium aluminum complex hydroxide salt.

## Description

### Technical Field

The present invention relates to a novel complex metal hydroxide salt which may be represented by the formula (I)

[Aℓ ₂(Li ₍₁₋ₓ₎ · M_{(x+y)} (ZnO)_{z}(OH) _{(6+2y)} ]ₙ(Aⁿ⁻) ₍₁₊ₓ₎ · mH₂O (I)

(wherein M is Mg and/or Zn, Aⁿ⁻ is an anion having a valence of n, and m, x, y and z are respectively in the ranges of 0 ≦ m < 5, 0 < x ≦ 0.5, 0 ≦ y ≦ 0.5, 0 ≦ z ≦ 0.5, 0 < y + z < 1, 0 < x + y + z ≦ 1), a stabilizer for halogen-containing resin which comprises said complex metal hydroxide salt as an effective ingredient and a halogen-containing resin composition which comprises said stabilizer.

### Background Art

It is well known that when halogen-containing resins such as a polyvinyl chloride resin and the like are subjected to a heat molding process, there occur troubles such as discoloration and deterioration of the resins as well as corrosion formation in a molding machine by a heat decomposition reaction such as dehydrochlorination. The heat decomposition of polyvinyl chloride resin is generally considered to be promoted by catalylic action of hydrogen chloride which generates in an early stage of decomposition. Therefore, it has been widely conducted to incorporate stabilizers for neutralizing and capturing hydrogen chloride in the early stage of decomposition. Various chlorine-capturing agents have been used for removing the catalyst residue derived from Ziegler catalyst or Natta catalyst used for preparation of polyolefin.

As an example of such a thermal stabilizer and chlorine-capturing agent, Japanese Patent Kokai No. 5-179052 proposes a technics employing as a resin stabilizer lithium aluminum complex hydroxide salt known from old.

Though the above-mentioned lithium aluminum complex hydroxide salt exhibits some extent of thermal stabilizing action toward a chroline-containing resin, there is a problem that it makes the resin colored strongly owing to high content of an alkali metal (lithium) of an electron donor nature. Therefore, it can not be put into practical use. Also, its thermal stability and chlorine-capturing ability are unsufficient because it has a basic skeleton comprising aluminum hydroxide which is hard to react with an acid.

### Disclosure of the Invention

An object of the present invention is to provide a stabilizer for halogen-containing resin which causes little coloration toward halogen-containing resin and which is excellent in the thermal stability and the ability to capture halogen such as chlorine in consideration of the above actual circumstances.

As a result of having ardently studied for solving the above problem, the present inventors have found that the above object can be achieved by a complex metal hydroxide salt which may be represented by the formula (I)

[Aℓ ₂(Li ₍₁₋ₓ₎ · M_{(x+y)} (ZnO)_{z}(OH) _{(6+2y)} ]ₙ(Aⁿ⁻) ₍₁₊ₓ₎ · mH₂O (I)

(wherein M is Mg and/or Zn, Aⁿ⁻ is an anion having a valence of n, and m, x, y and z are respectively in the ranges of 0 ≦ m < 5, 0 < x ≦ 0.5 (preferably 0.01 ≦ x < 0.5) 0 ≦ y ≦ 0.5, 0 ≦ z ≦ 0.5, 0 < y + z < 1 (preferably 0.01 ≦ y + z ≦ 0.5), 0 < x + y + z ≦ 1).

That is, the present invention is a complex metal hydroxide salt represented by the above formula (I) (hereinafter, referred to as the compound I), a stabilizer for a halogen-containing resin which is characterized by containing the compound I as an effective ingredient and a halogen-containing resin composition which comprises said stabilizer for a halogen-containing resin.

More specifically, the complex metal hydroxide salt in the present invention can be classified into the following 3 types of complex metal hydroxide salts depending on the kind of the constituent components.

The first class is a complex metal hydroxide salt in the case of z = 0 which may be represented by the following formula:

[Aℓ ₂(Li ₍₁₋ₓ₎ · M_{(x+y)} (OH) _{(6+2y)} ]ₙ (Aⁿ⁻) ₍₁₊ₓ₎ · mH₂O)

(wherein M is Mg and/or Zn, Aⁿ⁻ is an anion having a valence of n, and m, x and y are respectively in the ranges of 0 ≦ m < 5, 0 < x ≦ 0.5 (preferably 0.01 ≦ x < 0. 5), 0 ≦ y ≦ 0.5 (preferably 0.01 ≦ y < 0.5).

The second class is a complex metal hydroxide salt in the case of 0 < y and 0 < z, which may be represented by the following formula:

[Aℓ ₂(Li ₍₁₋ₓ₎ · M_{(x+y)} (ZnO)_{z} (OH) _{(6+2y)} ]ₙ (Aⁿ⁻) ₍₁₊ₓ₎ · mH₂O

(wherein M is Mg and/or Zn, Aⁿ⁻ is an anion having a valence of n, and m, x, y and z are respectively in the ranges of 0 ≦ m < 5, 0 < x ≦ 0.5 (preferably 0.01≦ x < 0.5), 0< y + z < 1 (preferably 0.01 ≦ y + z ≦ 0.5), 0 < x + y + z ≦ 1, 0 < y, 0 < z).

The third class is a complex metal hydroxide salt in the case of y = 0, which may be represented by the following formula:

[Aℓ ₂(Li ₍₁₋ₓ₎ · Mₓ(MO)_{z}(OH)₆]ₙ(A ⁿ⁻) ₍₁₊ₓ₎ · mH₂O

(wherein M is Mg and/or Zn, Aⁿ⁻ is an anion having a valence of n, and m, x and z are respectively in the ranges of 0≦ m < 5, 0 < x ≦ 0.5 (preferably 0.01≦ x < 0.5), 0< z ≦ 0.5 (preferably 0.01 ≦ z < 0.5)).

The compound (I) of the present invention is a complex metal hydroxide salt wherein hydroxide of Mg and/or Zn or oxide of Zn is introduced in the form of substantially amorphous into a lithium aluminum compound which consists of basic layers having a skeleton of entering lithium ion and divalent metal ion (Mg and/or Zn) to a vacant site of an aluminum hydroxide octahedron layer of the gibbsite structure and an intermediate layer consisting of an anion and water of crystallization.

The divalent metals of Mg and/or Zn entered to the vacant makes inevitably the anion amount in the intermediate layer larger than lithium aluminum complex hydroxide salt wherein monovalent lithium alone is entered into the vacant site of the octahedron layer, and consequently an ion exchangeable capacity with halogen such as chlorine is increased.

Furthermore, the compound (I) of the present invention which contains hydroxide of Mg and/or Zn or oxide of Zn in the form of substantially amorphous has better reactivity and causes more rapid neutralization reaction toward hydrochloric acid generated from polyvinyl chloride than lithium aluminum complex hydroxide salt, thus supply deficiency in the initial reactivity of the lithium aluminum complex hydroxide salt and shows action of increasing hydrochloric acid-neutaralizing capacity.

As these results, for example when it is used as a thermal stabilizer for polyvinyl chloride the thermal stability may be improved remarkably in comparison with the lithium aluminum complex hydroxide salt and at the same time the improvement in the initial coloration may be achieved.

As an anion of the complex metal hydroxide salt which may be used in the present invention, carbonate ion, hydroxy acid ion of chlorine and hydroxy acid ion of phosphorous may be taken. As hydroxy acid, there may be used one or more members selected from the group consisting of perchloric acid, phosphoric acid, phosphorous acid and metaphosphoric acid. Also, as other anions there may be taken organic acids such as silicic acid, acetic acid, propionic acid, adipic acid, benzoic acid, phthalic acid, terephtharic acid, maleic acid, fumaric acid, citric acid, tartaric acid, succinic acid, p-hydroxybenzoic acid, salicylic acid, picric acid; and inorganic acids such as sulfuric acid, nitric acid, hydrochloric acid, iodine, fluorine, bromine and the like. Among these anions, especially perchloric acid intercalated complex metal hydroxide salt has an improved color preventing property in an initial coloration, coloration during processing, and color change with time.
Also, this perchloric acid intercalated complex metal hydroxide salt is an excellent stabilizer for two layer structure of an amino group-containing resin such as urethane and polyvinyl chloride resin owing to its inhibitory action against the deterioration of polyvinyl chloride being promoted by amine which generates from urethane by thermal decomposition.

In the case that a stabilizer for halogen-containing resin which is characterized by containing as an effective ingredient the complex metal hydroxide salt of the present invention, that is the compound (I) is incorporated in a halogen-containing resin, it is preferable that the stabilizer is fine particle and has a high dispersibility and relatively developed crystallite. Accordingly as to an average secondary particle size 3 µm or less is preferable and, 1 µm or less is more preferable. Also, as a BET specific surface area 50 m²/g or less is preferable and 30 m²/g or less is more preferable.

The followings illustrates in more details a process for preparing the compound (I) where an anion is carbonic acid as a specific example.

A complex metal hydroxide salt of carbonate ion type that is a specific example of this compound (I) may be prepared specifically by reacting aluminum hydroxide, lithium carbonate and one or more compounds selected from the following groups: carbonate of magnesium such as magnesium carbonate and basic magnesium carbonate or carbonate of zinc; a water soluble magnesium or a water soluble zinc; magnesium hydroxide or zinc hydroxide and magnesium oxide or zinc oxide in an aqueous medium under heat treatment. As examples of a water soluble magnesium or a water soluble zinc, there can be taken combination of magnesium chloride or zinc chloride, magnesium nitrate or zinc nitrate, magnesium sulfate or zinc sulfate. Lithium carbonate and carbonate of magnesium or zinc may be used in such a amount that [Li/Al₂O₃ (molar ratio)] + [(MgO + ZnO) /Al₂O₃ (molar ratio)] becomes 1 with respect to the content of Al₂O₃ in aluminum hydroxide. However, slight excess of lithium component may be added.

The temperature range for heat treatment is preferably an appropriate temperature ranging from an ordinary temperature to 160 °C, more preferably above 90 ∼ 140 °C, most preferably 110 ∼ 140 °C. In the case where treatment temperature is lower than the ordinary temperature, it is not preferable because the extent of crystallinity become low.

The above complex metal hydroxide salt of carbonate ion type may be further treated with acids, for example mineral acids such as nitric acid, halogenic acid (hydrochloric acid and the like), sulfuric acid and so on or organic acids, for example monocarboxylic acid (monobasic organic acid, perchloric acid) such as acetic acid, thereby the carbonate ion intercalated between layers may be substituted by other anion. By selecting the starting materials suitably the complex metal hydroxide salt of other anion type which is obtainable by the above treatment is converted into a basic lithium magnesium aluminum complex hydroxide salt wherein ion intercalated between the layers is halogen ion, nitric acid ion, sulfuric ion, monocarboxylic acid ion and so on without passing through step for the above complex metal hydroxide salt of carbonate ion type.

The compound (I) of the present invention may be subjected to hydrothermal treatment using an autoclave and the like thereby BET specific surface area and secondary particle size may be adjusted to suitable range. The temperature range for hydrothermal treatment is preferably 100∼ 200°C, more preferably 110 ∼ 160°C.

The complex metal hydroxide salt of the present invention may be surface-treated with a coating agent thereby its dispersibility may be improved. As examples of coating agent there may be taken higher fatty acids, higher fatty acid salts, phosphoric esters of higher aliphatic alcohols, waxes, anionic surfactants, nonionic surfactants, cationic surfactants, coupling agents and the like.

As higher fatty acids, for example lauric acid, palmitic acid, oleic acid, stearic acid, capric acid, myristic acid and linoleic acid are taken. As higher fatty acid salts for example sodium or potassium salt of the above higher fatty acids are taken. As phosphoric esters of higher aliphatic alcohols, for example alkyl ether phosphoric acid such as lauryl ether phosphoric acid, stearyl ether phosphoric acid, oleyl ether phosphoric acid; dialkyl ether phosphoric acid; alkyl phenyl ether phosphoric acid; alkyl ether phosphoric acid salts such as sodium oleyl ether phosphate, potassium stearyl ether phosphate are taken.

As nonionic surfactants, for example alkylol amides such as coconut oil fatty acid monoethanol amide, lauric acid diethanol amide and the like; polyoxyalkyl phenyl ethers such as polyoxyethlene alkyl phenyl ether and the like; polyoxyethylene alkyl ether such as polyoxyethylene lauryl ether and the like; polyethylene glycol fatty acid esters such as distearic acid polyethylene glycol and the like; sorbitan fatty acid esters such as monocapric acid sorbitan, monostearic acid sorbitan, distearic acid sorbitan and the like; polyoxyethylene sorbitan fatty acid ester such as monostearic acid polyoxyethylene sorbitan and the like; polyoxyethylene sorbit fatty acid ester, polyoxyethylene polyoxypropylene alkyl ethers, glycol ethers and so on are taken.

As cationic surfactants, for example alkyl trimethyl ammonium salts such as lauryl trimethyl ammonium chloride, cetyl trimethyl ammonium bromide, stearyl trimethyl ammonium chloride and the like; alkyl dimethylbenzyl ammonium salts such as stearyl dimethylbenzyl ammonium chloride, benzalkonium chloride, lauryl dimethylbenzyl ammonium chloride and the like are taken.

As amphoteric surfactants, for example alkyl betaine such as coconut oil alkylbetaine and the like; alkylamide betaine such as lauryl dimethylamino acetic acid betaine and the like; imidazoline such as Z-alkyl-N-carboxymethyl-N-hydroxyethylimidazolium betaine; glycines such as polyoctylpolyaminoethyl glycine and the like are taken.

As coupling agent, for example silane coupling agent, aluminum coupling agent, titanium coupling agent, zirconium coupling agent and the like are taken.

One or more of the above coating agents may be used in the present invention.

The amount added of the coating agent is in the range of 0.1 to 10 % by weight, preferably 0.5 to 6 % by weight.

The amount less than 1 % by weight gives a bad dispersibility. On the other hand, when the amount exceeds 10 % by weight the effect is sufficient, but it is not economically advantageous.

The surface treatment may be easily conducted by either dry or wet method according to the conventional method.

Examples of the halogen-containing resin to be used in the present invention include polyvinyl chloride, polyvinylidene chloride, chlorinated polyethylene, chlorinated polypropylene, chlorinated rubber, vinyl chloride-vinyl acetate copolymer, vinyl chloride-ethylene copolymer, vinyl chloride-propylene copolymer, vinyl chloride-styrene copolymer, vinyl chloride-isobutylene copolymer, vinyl chloride-vinylidene chloride copolymer, vinyl chloride-styrene-maleic anhydride terpolymer, vinyl chloride-styrene-acrylonitrile terpolymer, vinyl chloride-butadiene copolymer, vinyl chloride-propylene chloride copolymer, vinyl chloride-vinylidene chloride-vinyl acetate terpolymer, vinyl chloride-acrylic ester copolymer, vinyl chloride-maleic acid ester copolymer, vinyl chloride-methacrylic acid ester copolymer, vinyl chloride-acrylonitrile copolymer, polymer such as internally plasticized polyvinyl chloride, blends of these chlorine-containing polymers and polymers or copolymers of α - olefins such as polyethylene, polypropylene, polybutene, poly-3-methylbutene or ethylene-vinyl acetate copolymer, polyolefins such as ethylene-propylene copolymer, their copolymers, polystyrene, acrylic resin, styrene-other monomer copolymer, acrylonitrile-butadiene-styrene terpolymer, acrylic ester-butadiene-styrene terpolymer, methacrylic ester-butadiene-styrene terpolymer, chloroprene, chlorinated sulfonylpolyethylene, chlorinated butyl rubber, brominated butyl rubber, fluorinated rubber and the like.

When the complex metal hydroxide salt of the present invention is used as the stabilizer for halogen-containing resins, it is preferred to use 0.01 to 10 parts by weight of the complex metal hydroxide salt per 100 parts by weight of the resins as above-mentioned. In this case, in order to prevent the initial coloration of the halogen-containing resin (especially vinyl chloride resin) it is desirable to use the complex metal hydroxide salt in conjunction with 0.01 to 10 parts by weight of zinc salt of an organic acid and 0.01 to 10 parts by weight of β -diketone and/or β - keto acid ester.

As β -diketones there can be selected dehydroacetic acid, dehydropropionylacetic acid, dehydrobenzoylacetic acid, cyclohexane-1,3-dione, dimedone, 2,2'-methylene biscyclohexane-1,3-dione, 2-benzylcyclohexane-1,3-dione, acetyltetralone, palmitoyltetralone, stearoyltetralone, benzoyltetralone, 2-acetylcyclohexanone, 2-benzoylcyclohexanone, 2-acetylcyclohexane-1,3-dione, benzoyl-p-chlorobenzoylmethane, bis(4-methylbenzoyl)methane, bis(2-hydroxybenzoyl)methane, benzoylacetylmethane, tribenzoylmethane, diacetylbenzoylmethane, stearoylbenzoylme thane, palmitoylbenzoylmethane, dibenzoylmethane, 4-methoxybenzoylmethane, bis(4-chlorobenzoyl)methane, bis(3,4-methylenedioxybenzoyl)methane, benzoylacetyloctylmethane, benzoylacetylphenylmethane, stearoyl-4-methoxybenzoylmethane, bis(4-tert-butylbenzoyl)methane, benzoylacetylethylmethane, benzoyltrifluoroacetylmethane, diacetylmethane, butanoylacetylmethane, heptanoylacetylmethane, triacetylmethane, distearoylmethane, stearoylacetylmethane, palmitoylacetylmethane, lauroylacetylmethane, benzoylformylmethane, acetylformylmethylmethane, benzoylphenylacetylmethane, bis(cyclohexanoyl)methane and the like.

Also, salts of these β -dikentone compounds with metal e.g. lithium, sodium, potassium, magnesium, calcium, barium, zinc, zirconium, tin, aluminum and the like may be used. Among these β -diketones, stearoylbenzoylmethane and dibenzoylmethane are especially preferred.

The stabilizer for halogen-containing resins comprising the complex metal hydroxide salt of the present invention may be used according to necessity in conjunction with various kinds of additives for use in plastic. Examples of such additives include organic acid metal salts, basic organic acid metal salts, perbasic organic acid metal salts, metal oxides, metal hydroxides, epoxy compounds, polyhydric alcohols, perhalogenate oxy acid salt, antioxidants such as phosphite, sulfur-containing antioxidants, phenolic antioxidants etc., ultraviolet absorbers, light stabilizers such as hindered amine, plasticizers, nucleus-forming agents, fillers and the like.

As metal resource in organic acid metal salts, basic organic acid metal salts and perbasic organic acid metal salts, there may be selected Li, Na, K, Ba, Mg, Sr, Zn, Cd, Sn, Cs, Al organotin and the like. Also, as examples of organic acids, carboxylic acids, organic phosphoric acids and phenols may be selected.

Examples of the carboxylic acids as above-mentioned include monocarboxylic acids such as acetic acid, propionic acid, butyric acid, valeric acid, caproic acid, enanthic acid, caprylic acid, neodecanoic acid, 2-ethylhexylic acid, pelargonic acid, capric acid, undecanoic acid, lauric acid, tridecanoic acid, myristic acid, palmitic acid, isostearic acid, stearic acid, 1,2-hydroxystearic acid, behenic acid, montanic acid, elaidic acid, oleic acid, linolic acid, linolenic acid, thioglycolic acid, mercaptopropionic acid, octylmercaptopropionic acid, benzoic acid, monochlorobenzoic acid, p-tert-butylbenzoic acid, dimethylhydroxybenzoic acid, 3,5-dibutyl-4-hydroxybenzoic acid, toluic acid, dimethylbenzoic acid, ethylbenzoic acid, cuminic acid, n-propylbenzoic acid, acetoxybenzoic acid, salicylic acid, p-tert-octylsalicylic acid and the like; divalent carboxylic acids such as oxalic acid, malonic acid, succinic acid, glutaric acid, adipic acid, pimelic acid, suberic acid, azelaic acid, sebacic acid, maleic acid, fumaric acid, citraconic acid, mesaconic acid, itaconic acid, aconitic acid, thio-dipropionic acid, phthalic acid, isophthalic acid, terephthalic acid, hydoxyphthalic acid, chlorophthalic acid and the like, monoesters or monoamides of these divalent carboxylic acids; tri-or tetravalent carboxylic acids such as butanetricarboxylic acid, butanetetracarboxylic acid, hemimellitic acid, trimellitic acid, mellophanic acid, pyromellitic acid; di-or triesters of these trivalent or tetravalent carboxylic acids.

Examples of organic phosphoric acids to be selected include mono- or dioctylphosphoric acid, mono- or didodecylphosphoric acid, mono- or di(nonylphenyl) phosphoric acid, nonyl phenyl phosphonate, stearyl phosphonate and the like.

Examples of phenols to be selected include phenol, cresol, xylenol, methylpropylphenol, methyl tert-octyl phenol, ethylphenol, isopropylphenol, tert-butylphenol, n-butylphenol, diisobutylphenol, isoamylphenol, diamylphenol, isohexylphenol, octylphenol, isooctylphenol, 2-ethylhexylphenol, tert-octylphenol, nonylphenol, dinonylphenol, tert-nonylphenol, decylphenol, dodecylphenol, octadecylphenol, cyclohexylphenol, phenylphenol, thiophenol, dodecylphenol and the like.

The organotin as shown below is incorporated as stabilizer in the resins. Examples of this organotin stabilizer to be selected include mono (or di) alkyltin laurate such as mono (or di) methyltin tri (or di) laurate, mono- (or di-) butyltin tri- (or di-) laurate, mono- (or di-) octyltin tri- (or di-) laurate and the like; mono- (or di-) alkyltin maleate such as polymer of mono (or di) methyltin maleate, polymer of mono- (or di-) butyltin maleate, mono (or di) methyltin tris (or bis) isooctyl maleate, mono- (or di) butyltin tris (or bis) isooctylmaleate, mono- (or di) octyltin tris (or bis) isooctylmaleate and the like; mono- (or di-) alkylmercaptides such as mono- (or di-) methyltin tris (or bis) iso-octyl thioglycolate, mono (or di) octyltin tris (or bis) iso-octyl thioglycolate,mono (or di) butyltin tris (or bis) thioglycolate, mono (or di) methyltin thioglycolate (or 2-mercaptopropionate), mono- (or di-) butyltin thioglycolate (or 2-mercaptopropionate), mono- (or di-) octyltin thioglycolate (or 2-mercaptopropionate), mono- (or di-) methyltin tri- (or di-) dodecylmercaptide, mono- (or di-) butyltin tri- (or di-) dodecylmercaptide, mono- (or di-) octyltin tri- (or di-) dodecylmercaptide, mono- (or di-) methyltinsulfide, dioctyltinsulfide, didodecyltinsulfi de, mono (or di) methyl or butyl or octyltin tris (or bis) 2-mercaptoethyloleate, thiobis [monomethyltin bis(2-mercaptoethyloleate)], thiobis [dimethyl or dibutyl or dioctyltin mono (2-mercaptoethyl oleate)], mono- (or di-) octyltin-s,s'-bis(isooctylmercapto acetate).

Examples of epoxy compounds to be selected include epoxy soybean oil, epoxy linseed oil, epoxy fish oil, fatty acid ester of epoxy tall oil, epoxy beef tallow oil, epoxy caster oil, epoxy safflower oil, butyl ester of epoxy linseed oil fatty acid, methyl epoxy stearate, butyl epoxy stearate, 2-ethylhexyl stearate or stearyl epoxy stearate, tris(epoxypropyl)isocyanurate, 3-(2-xenoxy)-1,2-epoxypropane, epoxydised polybutadiene, bisphenol A diglycidyl ether, vinyl cyclohexene diepoxide, dicyclopentadienediepoxide, 3,4-epoxycyclohexyl-6-methylepoxycyclohexane carboxylate and the like.

Examples of polyhydric alcohols to be selected include pentaerythritol, dipentaerythritol, sorbitol, mannitol, trimethylolpropane, ditrimethylolpropane, partial ester of pentaerythritol or dipenterythritol and stearic acid, bis(dipentaerythritol)adipate, glycerin, diglycerin, tris(2-hydroxyester)isocyanurate and the like.

Examples of plasticizers include phosphate plasticizers such as tributyl phosphate, triphenyl phosphate, tri(2-ethylhexyl)phosphate and the like; phthalic ester plasticizers such as dimethyl phthalate, dibutyl phthalate, dioctyl phthalate, diisodecyl phthalate and the like; aliphatic monobasic acid ester plasticizers such as butyl oleate, glycerol monooleate, butyl stearate, butyl epoxy stearate and the like; aliphatic dibasic acid ester plasticizers such as diisododecyl adipate, dibutyl adipate, di-2-ethylhexyl adipate and the like; divalent alcoholic ester plasticizers such as diethylene glycol dibenzoate and the like; hydroxy acid ester plasticizers such as methyl acetyl licinoleate and the like; chlorinated paraffin plasticizers; fatty acids such as oleic acid, palmitic acid and the like; metal salts of these fatty acids; fatty acid amide; wax such as polyethylene wax; liquid paraffin; esters such as glycerin ester of fatty acid; higher alcohol and so on.

As light stabilizers there may be taken hindered amines, cresols, melamines benzoic acid and the like.

Examples of hindered amine light stabilizers include 2,2,6,6-tetramethyl-4-piperidylstearate, 1,2,2,6,6-pentamethyl-4-piperidyl-stearate, 2,2,6,6-tetramethyl-4-piperidylbenzoate, N-(2,2,6,6-tetramethyl-4-piperidyl) dodecyl succinic acid imide, 1-(3,5-di-tert-butyl-4-hydroxyphenyl)propionyloxyethyl)-2,2,6,6-tetramethyl-4-piperidyl-(3,5-di-tert-butyl-4-hydroxyphenyl)propionate, bis(2,2,6,6-tetramethyl-4-piperidyl)sebacate, bis(1,2,2,6,6-pentamethyl-4-piperidyl)-2-butyl-2-(3,5-di-tert-butyl-4-hydroxybenzyl)maloate, N,N'-bis(2,2,6,6-tetramethyl-4-piperidyl)hexamethylenediamine, tetra(1,2,2,6, 6-pentamethyl-4-piperidyl)butanetetracarboxylate, tetra(2,2, 6,6-tetramethyl-4-piperidyl)butanetetracarboxylate, bis(1,2, 2,6,6-pentamethyl-4-piperidyl)di(tridecyl)butanetetracarboxylate, bis(2,2,6,6-tetramethyl-4-piperidyl)di(tridecyl) butanetetracarboxylate, 3,9-bis{1,1-dimethyl-2-[tris(2,2,6,6-tetramethyl-4-piperidyloxycarbonyloxy) butylcarbonyloxy]ethyl} -2,4,8,10-tetraoxaspiro[5,5]undecane, 3,9-bis {1,1-dimethyl-2-[tris(1,2,2,6,6-tetramethyl-4-piperidinyloxycarbonyloxy)butylcarbonyloxy]ethyl} - 2,4,8,10-tetraoxaspiro[5,5]undecane, 1,5,8,12-tetrakis{4,6-bis[N-(2,2,6,6-tetramethyl-4-piperidyl)butylamino]-1,3,5- triazine-2-yl} -1,5,8,12-tetrazadodecane, 1-(2-hydroxyethyl)-2,2,6,6-tetramethyl-4-piperidinol/succinic acid dimethyl ester condensate, 2-tert-octylamino-4,6-dichloro-s-triazine/N,N'-bis(2,2,6,6-tetramethyl-4-piperidyl) hexamethylenediamine condensate, N,N'-bis(2,2,6,6-tetramethyl-4-piperidyl)hexamethylenediamine/dibromoethane condensate and the like.

It is suitable that the amount of the light stabilizers to be incorporated is 0.02 to 5 parts by weight per 100 parts by weight of resins. The use of too small amount does not exert the effect, while the use of too large amount impairs the transparency of the film.

As antioxidants, phenol, phosphorus acid, sulfur containing ones may be taken.

Examples of phenolic antioxidants include 2,6-di-tert-butyl-p-cresol, 2,6-diphenyl-4-octadecyloxylphenol, stearyl(3,5-di-tert-butyl-4-hydroxyphenyl)propionate, distearyl(3,5-di-tert-butyl-4-hydroxybenzyl)phosphate, thiodiethyleneglycol bis[(3,5-di-tert-butyl-4-hydroxyphenyl) propionate], 1,6-hexamethylene bis [(3,5-di-tert-butyl-4-hydroxyphenyl)propionate], 1,6-hexamethylene bis [(3,5-di-tert-butyl-4-hydroxyphenyl)propionamide], 4,4'-thiobis(6-tert-butyl-m-cresol), 2,2'-methylene bis(4-methyl-6-tert-butylphenol), 2,2'-methylene bis(4-ethyl-6-tert-butylphenol), bis[3,3-bis(4-hydroxy-3-tert-butylphenyl) butyric acid]glycol ester, 4,4'-butylidene bis(6-tert-butyl-m-cresol), 2,2'-ethylidene bis(4,6-di-tert-butylphenol), 2,2'-ethylidene bis(4-sec-butyl-6-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl]terephthalate, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl) propionyloxyethyl] isocynurate, tetrakis[methylene-3-(3,5-di-tert-butyl-4-hydroxyphenyl)propionate]methane, 2-tert-butyl-4-methyl-6-(2-acryloyloxy-3-tert-butyl-5-methylbenzyl)phenol, 3,9-bis{1,1-dimethyl-2-[(3-tert-butyl-4-hydroxy-5-methylphenyl)propionyloxy]ethyl} -2,4,8,10-tetraoxaspiro[5,5]undecane, triethylene glycol bis[(3-tert-butyl-4-hydroxy-5-methylphenyl)propionate]and the like.

Examples of phosphite antioxidants include tris (nonylphenyl) phosphite, tris(2,4-di-tert-butylphenyl) phosphite, tris [2-tert-butyl-4-(3-tert-butyl-4-hydroxy-5-methylphenylthio)-5-methylphenyl]phosphite, tridecyl phosphite, octyl diphenyl phosphite, di(decyl)monophenyl phosphite, monodecyl diphenyl phosphite, mono(dinonylpheny l)bis(nonylphenyl)phosphite, di(tridecyl) pentaerythritol diphosphite, distearyl pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, tetra(tridecyl)isopropylidenediphenyl diphosphite, tetra(tridecyl)isopropylidenediphenyl diphosphite, tetra(c₁₂₋₁₆ mixed alkyl)-4,4'-n-butylidene bis(2-tert-butyl-5-methylphenol)diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphite, 2,2'-methylene bis(4,6-di-tert-butylphenyl)(octyl)phosphite and the like.

Examples of sulfur-containing antioxidants include dialkyldithiopropionate such as dilauryl, dimyristyl or distearyl ester of thiodipropionic acid; β -alkylmercaptoprop ionic acid ester of polyol such as tetra(β - dodecylmercaptopropionate) of pentaerithrytol.

It is suitable that the amount of the above antioxidants to be incorporated is about 0.01 ∼ 3%.

As antistatic agents, there may be taken polyoxyethylene alkylamine, polyglycol ether, nonionic active agent, cationic active agent and so on.

As pigments, all of organic and inorganic ones which may be usually used may be preferably used and does not particularly limited.

As ultraviolet absorbers, there may be taken benzophenones, benzotriazoles, salicylic acid esters, substituted oxanilides, cyanoacrylates and the like.

Examples of benzophenones include 2-hydroxybenzophenones such as 2,4-dihydroxylbenzophenone, 2-hydroxy-4-methoxybenzophenone, 2-hydroxy-4-octoxybenzophenone, 5,5'-methylene bis(2-hydroxy-4-methoxy)benzophenone and the like.

Examples of benzotriazoles include 2-(2'-hydroxyphenyl)benzotriazoles such as 2-(2'-hydroxy-5'-methylphenyl) benzotriaozole, 2-(2'-hydroxy-3',5'-di-tert-butylphenyl) benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole, 2,2'-methylenebis(4-tert-octyl-6-benzotriazole)phenol and the like.

Examples of salicylic acid esters include benzoates such as phenylsalicylate, resorcinol monobenzoate, 2,4-di-tert-butylphenyl-3',5'-di-tert-butyl-4'-hydroxybenzoate, hexadecyl-3,5-di-tert-butyl-4-hydroxybenzoate and the like.

Examples of substituted oxanilides include 2-ethyl-2'-ethoxyoxanilide, 2-ethoxy-4'-dodecyloxanilide and the like.

Examples of cyanoacrylates include ethyl- α -cyano- β , β -diphenyl acrylate, methyl-2-cyano-3-methyl-3-(p-methoxyphenyl)acrylate and the like.

As fillers and other thermal stabilizers, there can be used inorganic compounds such as magnesium carbonate, magnesium silicate, silicon dioxide, aluminum oxide, barium sulfate, calcium sulfate, magnesium hydroxide, aluminum hydroxide, calcium hydroxide, phosphate, silicate, hydrotalcite and the like which may be usually employed.

One or more of the above various additives may be properly selected for incorporation. The amount of the additives to be incorporated may be in such a range to cause no deterioration in the property of the film and is not particularly limited if it is in the range.

The following examples illustrate the present invention more clearly.

The BET specific surface area can be determined by measuring nitrogen adsorption according to the conventional method. The secondary particle size can be determined by a method which comprises adding sample powder to an organic solvent such as ethanol or n-hexane, dispersing by ultrasonic, dropping the dispersion on a sample mount for a microscope and observing under a microscope. An electron microscope, an optical microscope and so on can be used as the microscope.

### Best Modes for Carrying Out the Invention

### Example 1

Water was added to a mixture of 214.0g of powdery aluminum hydroxide containing 65 % by weight of Al₂O₃, 13.9g of magnesium carbonate containing 42.0 % by weight of MgO, 15.7g of magnesium hydroxide and 50.2g of lithium carbonate to make 3 liters (L) of slurry in the total volume.

This slurry was subjected to heat treatment in 5 L of an autoclave at 150 °C for 4 hours. While the temperature of the slurry was kept to 50 °C, 10.5 g of sodium stearate was added to carry out surface-treatment. Thereafter, the slurry was filtered to form a cake under reduced pressure with a Buchner funnel, and the cake was washed with a quantity of water equivalent to about 50 times of the Al₂O₃ content in weight. After washing, the cake was dried overnight at approximately 110 °C to yield 350g of white powders.

The obtained white powders were subjected to chemical analysis. As the result, it had the composition of [Al₂(Li_{0.90} · Mg_{0.30})(OH)_{6.4}]₂(CO₃)_{1.10} · 2.0H₂O.
It had a BET specific surface area of 21.3 m²/g, an average particle size of 0.9 µm and a refractive index of 1.53.

### Example 2

Water was added to a mixture of 214.0g of powdery aluminum hydroxide containing 65 % by weight of Al₂O₃, 13.9g of magnesium carbonate containing 42.0 % by weight of MgO, 32.0g of zinc chloride and 50.2g of lithium carbonate to make 3 liters (L) of slurry in the total volume.

This slurry was subjected to heat treatment in 5 L of an autoclave at 150 °C for 4 hours. While the temperature of the slurry was kept to 50 °C, 11.5 g of sodium stearate was added to carry out surface-treatment. Thereafter, the slurry was filtered to form a cake under reduced pressure with a Buchner funnel, and the cake was washed with a quantity of water equivalent to about 50 times of the Al₂O₃ content in weight. After washing, the cake was dried overnight at approximately 110 °C to yield 370g of white powders.

The obtained white powders were subjected to chemical analysis. As the result, it had the composition of [Al₂(Li_{0.90} · Mg_{0.10})(ZnO)_{0.2}(OH)_{6.0}]₂(CO₃)_{1.10} · 2.0H₂O.
It had a BET specific surface area of 23.2 m²/g, an average particle size of 1.0 µm and a refractive index of 1.53.

### Example 3

Water was added to a mixture of 214.0g of powdery aluminum hydroxide containing 65 % by weight of Al₂O₃, 32.0g of zinc chloride and 53.2g of lithium carbonate to make 3 liters (L) of slurry in the total volume.

This slurry was subjected to heat treatment in 5 L of an autoclave at 150 °C for 4 hours. While the temperature of the slurry was kept to 50 °C, 11.5 g of sodium stearate was added to carry out surface-treatment. Thereafter, the slurry was filtered to form a cake under reduced pressure with a Buchner funnel, and the cake was washed with a quantity of water equivalent to about 50 times of the Al₂O₃ content in weight. After washing, the cake was dried overnight at approximately 100 °C to yield 370g of white powders.

The obtained white powders were subjected to chemical analysis. As the result, it had the composition of [Al₂(Li_{1.0} (ZnO)_{0.2}(OH)_{6.0}]₂(CO₃)_{1.0} · 2.0H₂O.
It had a BET specific surface area of 18.5 m²/g, an average particle size of 1.0 µm and a refractive index of 1.53.

### Example 4

Water was added to the composition obtained in Example 1 to make a 10 % slurry. To the slurry was added 5 % aqueous perchloric acid solution while a stirring was vigorously operated and then the resultant mixture was spray-dried.

The obtained white powders were subjected to chemical analysis. As the result, it had the composition of [Al₂(Li_{0.9} · Mg_{0.3})(OH)_{6.4}]₂(CO₃)_{0.2}(ClO₄)_{0.9} · 2.0H₂O.
It had a BET specific surface area of 20.5 m²/g, an average particle size of 0.9 µm and a refractive index of 1.53.

### Comparative Example 1

Water was added to a mixture of 214.0g of powdery aluminum hydroxide containing 65 % by weight of Al₂O₃ and 55.0g of lithium carbonate to make 3 liters (L) of slurry in the total volume.

This slurry was subjected to heat treatment in 5 L of an autoclave at 150 °C for 4 hours. While the temperature of the slurry was kept to 50 °C, 10.5 g of sodium stearate was added to carry out surface-treatment. Thereafter, the slurry was filtered to form a cake under reduced pressure with a Buchner funnel, and the cake was washed with a quantity of water equivalent to about 50 times of the Al₂O₃ content in weight. After washing, the cake was dried overnight at approximately 110 °C to yield 330g of white powders.

The obtained white powders were subjected to chemical analysis. As the result, it had the composition of [Al₂Li(OH)₆]₂(CO₃) · 2.0H₂O.
It had a BET specific surface area of 18.1 m²/g, an average particle size of 0.9 µm and a refractive index of 1.55.

### (Experiment 1)

As the evaluation samples, the products obtained by Examples 1 and 2 and Comparative Example 1 were used. The coloration and thermal stability tests were conducted with respect to the following formulation 1.

The results of coloration test are shown in table 1 and those of thermal stability test are shown in table 2.

### Formulation 1

| | |
|---|---|
| Polyvinyl chloride resin (degree of polymerization:1050) | 100 parts |
| Zinc stearate | 0.3 part |
| Dibenzoylmethane | 0.1 part |
| Sample | 1.0 part |

### Molding method:

The above formulated composition was kneaded by a roll mill at 170 °C to prepare a polyvinyl chloride sheet having a thickness of 0.5 mm.

### Test method:

### (Coloration)

The sample sheet prepared by roll mill kneading was heated at 190 °C under pressure of 100 kg/cm² for 10 minutes. And, degree of coloration was determined visually to evaluate its extent. The obtained result is shown in table 1 wherein the mark "A", "B", "C" and "D" indicate colorless, slight yellow, pale yellow, brown, respectively.

**Table 1**

| Example 1 | Example 2 | Comparative Example 1 |
|---|---|---|
| A | A | C |

### (Thermal stability test)

The sample sheet obtained by the roll mill kneading was subjected to a 190 °C Geer's oven test. The obtained results are shown in table 2 wherein the marks "A","B" "C", "D" and "E" indicate colorless, slight yellow, pale brown, brown, black, respectively.

**Table 2**

| Time | Example 1 | Example 2 | Comparative Example 1 |
|---|---|---|---|
| 0 min. | A | A | B |
| 10 min. | A | A | B |
| 20 min. | B | A | C |
| 30 min. | B | B | C |
| 40 min. | B | B | D |
| 50 min. | C | B | E |
| 60 min. | D | C | |
| 70 min. | D | E | |

### (Experiment 2)

The thermal stability test was conducted according to the similar manner as in Experiment 1 using the halogen-containing resin composition obtained in Example 1 and the following formulations. These results are shown in table 2.

The halogen-containing resin composition obtained in Example 1 was heated at 200 °C to reduce its water content into zero and used for formulations 2, 3 and 4, and the Geer's oven test was conducted at 200 °C with respect to these 3 formulations. Also, the Geer's oven test was conducted at 180 °C with respect to formulations 9 ∼ 12.

The results are shown in table 3.

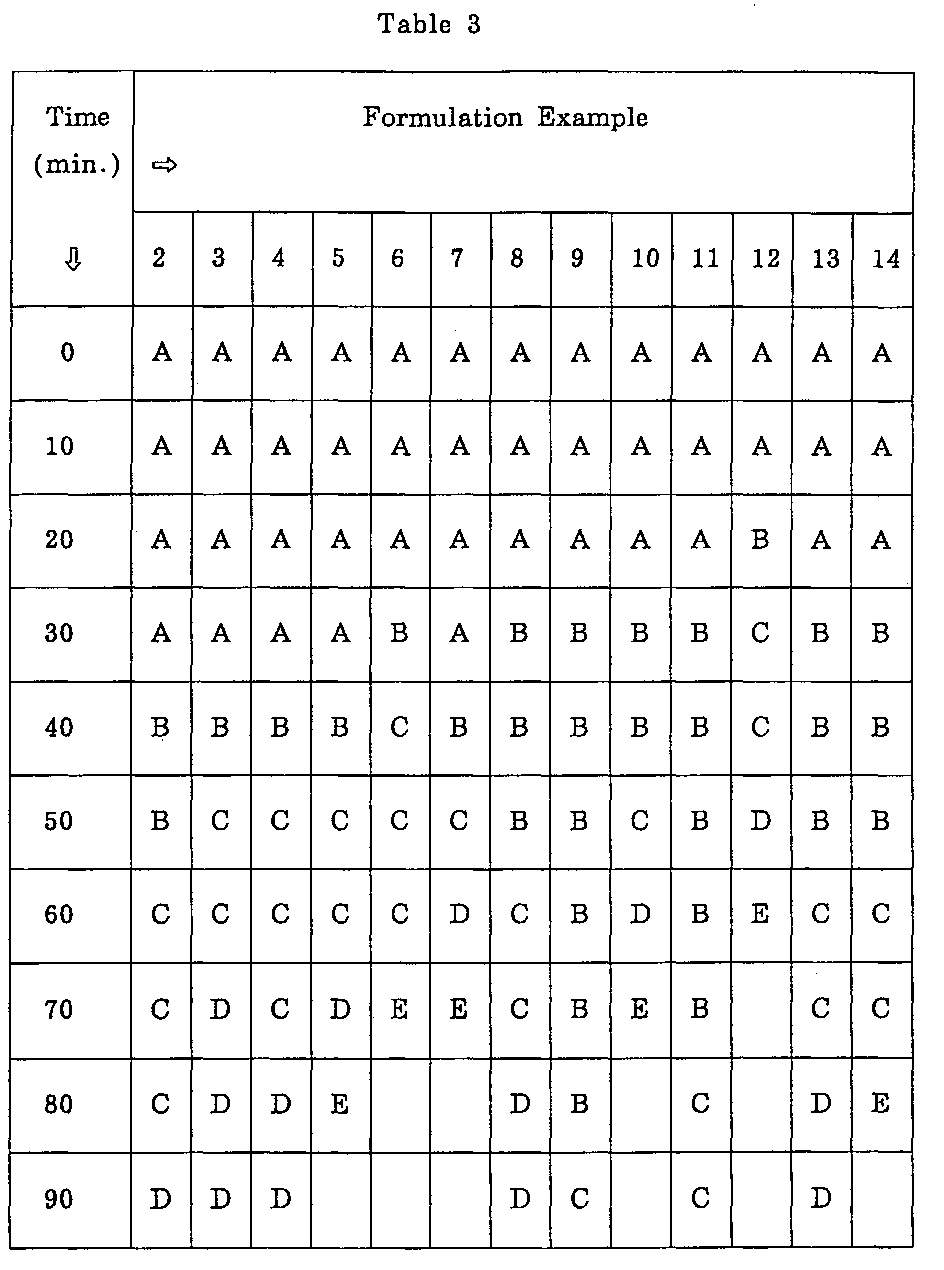

### Formulation 2

| | |
|---|---|
| Polyvinyl chloride resin (degree of polymerization:800) | 100 parts |
| Monooctyltin mercaptide | 1.0 part |
| "SL-02" (a trade name, a product of of Riken Vitamin Co., Ltd. lubricating agent) | 0.3 part |
| Sample | 1.0 part |

### Formulation 3

| | |
|---|---|
| Polyvinyl chloride resin (degree of polymerization 800) | 100 parts |
| Monooctyltin mercaptide | 2.0 part |
| "SL-02" (a trade name, a product of of Riken Vitamin Co., Ltd. lubricating agent) | 0.3 part |

### Formulation 4

| | |
|---|---|
| Polyvinyl chloride resin (degree of polymerization:800) | 100 parts |
| Monooctyltin mercaptide | 1.5 part |
| "SL-02" (a trade name, a product of of Riken Vitamin Co., Ltd. lubricating agent) | 0.3 part |
| Sample | 0.5 part |

### Formulation 5

| | |
|---|---|
| Polyvinyl chloride resin (degree of polymerization:800) | 100 parts |
| Zinc stearate | 0.5 part |
| Dibenzoylmethane | 0.1 part |
| Sample | 1.0 part |
| Dipentaerythritol (DPE) | 0.4 part |

### Formulation 6

| | |
|---|---|
| Polyvinyl chloride resin (degree of polymerization:800) | 100 parts |
| Zinc stearate | 0.5 part |
| Sample | 1.0 part |
| Dibenzoylmethane | 0.2 part |
| Dipentaerythritol (DPE) | 0.2 part |

### Formulation 7

| | |
|---|---|
| Polyvinyl chloride resin (degree of polymerization: 1050) | 100 parts |
| Zinc stearate | 0.3 part |
| Dibenzoylmethane | 0.1 part |
| Sample | 1.0 part |
| Dioctyl phthalate | 50 parts |

### Formulation 8

| | |
|---|---|
| Polyvinyl chloride resin (degree of polymerization:1050) | 100 parts |
| Zinc stearate | 0.2 part |
| Sample | 1.5 part |
| Dibenzoylmethane | 0.2 part |
| Dioctyl phthalate | 50 parts |

### Formulation 9

| | |
|---|---|
| Polyvinyl chloride resin (degree of polymerization: 1050) | 100 parts |
| Zinc stearate | 0.3 part |
| Dibenzoylmethane | 0.1 part |
| Barium stearate | 1.0 part |
| Sample | 0.4 part |
| Dioctyl phthalate | 50 parts |

### Formulation 10

| | |
|---|---|
| Polyvinyl chloride resin (degree of polymerization: 1050) | 100 parts |
| Zinc stearate | 0.3 part |
| Dibenzoylmethane | 0.1 part |
| Barium stearate | 1.0 part |
| Dioctyl phthalate | 50 parts |

### Formulation 11

| | |
|---|---|
| Polyvinyl chloride resin (degree of polymerization:1050) | 100 parts |
| Zinc stearate | 0.3 part |
| Dibenzoylmethane | 0.1 part |
| Calcium stearate | 1.0 part |
| Sample | 0.4 part |
| Dioctyl phthalate | 50 parts |

### Formulation 12

| | |
|---|---|
| Polyvinyl chloride resin (degree of polymerization:1050) | 100 parts |
| Zinc stearate | 0.3 part |
| Dibenzoylmethane | 0.1 part |
| Calcium stearate | 1.0 part |
| Dioctyl phthalate | 50 parts |

### Formulation 13

| | |
|---|---|
| Polyvinyl chloride resin (degree of polymerization:1050) | 100 parts |
| Zinc stearate | 0.3 part |
| Dibenzoylmethane | 0.1 part |
| Sample | 1.0 part |
| Dioctyl phthalate | 50 parts |
| Epoxy soyabean oil | 3 parts |

### Formulation 14

| | |
|---|---|
| Polyvinyl chloride resin (degree of polymerization:1050) | 100 parts |
| Zinc stearate | 0.3 part |
| Dibenzoylmethane | 0.1 part |
| Sample | 0.4 part |
| Dioctyl phthalate | 50 parts |
| Phosphite ("Adecastab MARK 1500" a trade name) | 0.5 part |

### Industrial Applicability

The complex metal hydroxide salt represented by the formula (I ) in the present invention is preferable as the stabilizer for halogen-containing resin since it causes little coloration and has excellent thermal stability.

## Claims

**1.** A complex metal hydroxide salt represented by the formula (I)
[Aℓ ₂(Li ₍₁₋ₓ₎ · M_{(x+y)} (ZnO)_{z}(OH) _{(6+2y)} ]ₙ (Aⁿ⁻) ₍₁₊ₓ₎ · mH₂O (I)
(wherein M is Mg and/or Zn, Aⁿ⁻ is an anion having a valence of n, and m, x, y and z are respectively in the ranges of 0 ≦ m < 5, 0 < x ≦ 0.5, 0 ≦ y ≦ 0.5, 0 ≦ z ≦ 0.5, 0 < y + z < 1, 0 < x + y + z ≦ 1).

**2.** The complex metal hydroxide salt as claimed in claim 1 wherein A is one or more of anions selected from the group consisting of carbonate ion, hydroxy acid ion of chlorine and hydroxy acid ion of phosphorous.

**3.** The complex metal hydroxide salt as claimed in claim 1 wherein said complex metal hydroxide salt is further coated with one or more of compounds selected from the group consisting of a higher fatty acid, a higher fatty acid salt, a phosphoric ester of higher aliphatic alcohol, a wax, an anionic surfactant, a nonionic surfactant, a cationic surfactant, an amphoteric surfactant and a coupling agent.

**4.** A stabilizer for halogen-containing resin which contains as an effective ingredient the complex metal hydroxide salt claimed in claims 1 ∼ 3.

**5.** A halogen-containing resin composition which comprises incorporating 0.01 ∼ 10 parts by weight of the stabilizer for halogen-containing resin claimed in claim 4 per 100 parts by weight of a halogen-containing resin.

**6.** A halogen-containing resin composition which comprises incorporating 0.01 ∼ 10 parts by weight of the stabilizer for halogen-containing resin claimed in claim 4, 0.01 ∼ 10 parts of zinc salt of an organic acid and 0.01 ∼ 10 parts by weight of β -diketone and/or β -keto acid ester per 100 parts by weight of a halogen-containing resin.

**7.** A halogen-containing resin composition which comprises incorporating 0.01 ∼ 10 parts by weight of the stabilizer for halogen-containing resin as claimed in claim 4 and 0.01 ∼ 10 parts by weight of an organotin stabilizer per 100 parts by weight of a halogen-containing resin.

**9.** A halogen-containing resin composition which comprises incorporating 0.01 ∼ 10 parts by weight of the stabilizer for halogen-containing resin as claimed in claim 4, 0.01 ∼ 10 parts of zinc salt of an organic acid and 0.01 ∼ 10 parts by weight of a β -diketone and/or a β - keto acid ester and 0.01 ∼ 10 parts by weight of polyol and/or a polyol partial ester per 100 parts by weight of a halogen-containing resin.

**10.** A halogen-containing resin composition which comprises incorporating 0.01 ∼ 10 parts by weight of the stabilizer for halogen-containing resin as claimed in claim 4 and 0.01 ∼ 5 parts by weight of a phosphite per 100 parts by weight of a halogen-containing resin.
